# EUROPEAN PATENT SPECIFICATION

(11) **EP 0 345 044 B1**
(45) Date of publication and mention of the grant of the patent: **26.01.1994**
(21) Application number: 89305488.2
(22) Date of filing: 31.05.1989
(51) Int. Cl.: C03B 9/38, C03B 9/40, G05D 23/27, G01J 5/10

(54) **Moulding glassware**
Formen von Glasgegenständen
Moulage d'objets en verre

(30) Priority: 31.05.1988 GB 8812840
(43) Date of publication of application: 06.12.1989
(73) Proprietor: GRAPHOIDAL DEVELOPMENTS LIMITED, Dronfield Sheffield S18 6PN (GB)
(72) Inventor: Brown, Roy, Sheffield S18 5XJ (GB)
(74) Representative: Ford, Michael Frederick

(56) References cited:
- EP-A- 0 151 339
- US-A- 3 332 765
- US-A- 4 104 046
- US-A- 4 654 066

## Description

This invention relates to apparatus and a process for moulding hollow glassware, such as glass bottles, using automatic machinery.

In the conventional processes for moulding glassware, a pair of so-called "blank" moulds close together over a neck ring or rings, a gob of molten glass is dropped into the or each mould cavity, usually through a funnel which is subsequently removed, a baffle is placed over the mould cavity to close its upper end, and air is blown into the bottom of the mould cavity to blow the gob out into a parison. In the "press and blow" process a plunger is used to press the gob out into a parison. In the "blow and blow" process "settle air" is blown into the top of the mould to settle the gob in the mould cavity before it is blown out into a parison.

After the parison has been formed the blank moulds open and the parison(s) are carried away by the neck ring(s) to the "blow" or "finish" moulds where they are blown out into the finished ware.

The usual machine for carrying out the moulding process is the so-called IS (Individual Section) machine. This has several sections each provided with a pair of blank moulds which may define one, two or more cavities. Each section is also provided with a set of blow moulds having a corresponding number of cavities. The so-called "invert arm" or "revert arm" holds the neck ring(s) in which the necks of the glassware are formed; this arm transports these rings and the parisons from the blank to the blow moulds.

It is normal for blow and blank moulds to be subjected to a flow of cooling air. It is known to provide at least a coarse regulation of this air flow to enable the mould temperatures to be adjusted and, for example, to allow moulds to heat up to a working temperature when a section of the machine is restarted after it has been turned off for a period.

More recently an improved system has been introduced in which the moulds have air flow passages through them and co-operating parts on the machine are arranged to direct an air flow through these passages. Water cooled moulds, or mould carriers are also known.

Attempts have been made to monitor mould temperatures, for example by putting a thermocouple within the moulds. It is also known to check a mould temperature with a hand-held portable probe.

US-A-3332765 (Champlin) describes a heat control for glass-forming blow moulds which uses an infra-red sensitive photo tube to detect the temperature of a newly-formed parison. An electrical control panel collects the signal from the photo tube at a predetermined instant during the moulding cycle, which is determined by the timing drum of a conventional individual section (IS) machine. The measured temperature can determine the amount of coolant supplied to the parison.

EP-A-151339 describes an IS glassware forming machine which uses an infra-red detecting device to detect the temperature of the moulds of the apparatus.

We have now appreciated that temperature control could be provided by monitoring the temperature of the glass which is being formed by the moulds rather than by monitoring the temperature of the moulds themselves. In one aspect, the present invention provides a method of monitoring or regulating temperature on an Individual Section machine for forming hollow glassware in a moulding cycle which comprises forming molten glass into a hollow parison in a mould of a first set of moulds, releasing the parison from the mould, transferring it to a mould of a second set, blowing it out into shape and releasing the blown glassware from the second mould, which method includes a step of observing the temperature of glass released from a said mould,
characterised in that a sensor for the temperature views the glass along a sight path which is opened for an interval during opening movement of the mould by means of the machine's movement of the mould. Preferably there is included a further step of regulating a supply of coolant to the said mould in response to the observed glass temperature.

Control of the coolant will generally be by control of the flow of air over or through the moulds. Conceivably, it could be by control of the flow of water through water cooled moulds or water cooled mould carriers if these are employed.

Observation of temperature may be observation of the temperature of moulded parisons after release from the blank moulds and before entry to the blow moulds. In particular, the observation could be of the temperature of parisons as these are released from blank moulds but before the start of their movement by the invert arm towards the blow moulds.

Additionally or alternatively, for monitoring or regulating the temperature of blow moulds, the temperature of formed glassware released from these moulds could be observed, possibly before the glassware has been released by the neck rings or possibly shortly after release and while the glassware remains in the vicinity of the blow moulds.

Observation of temperature of the formed glass is preferably by observation of radiation from it and thereby detecting its temperature.

In another aspect of this invention there is provided a method of detecting the temperature of formed glass released from moulds of a glassware forming machine by observing radiation from the glass.

Detecting temperature by means of emitted radiation may be carried out using an infra-red sensor to detect the level of radiation. Alternatively, temperature may be detected by observing the colour temperature of the glass.

An advantage of sensing temperature by means of radiation is that the sensor used for the purpose need not have any moving parts and is, therefore, better equipped to withstand the hostile environment of an IS machine where there is a small amount of space available, heavy vibration and heavy parts which are routinely removed and replaced, with a consequent risk of accidental damage to any delicate parts in the vicinity.

This invention also provides an IS machine for carrying out the abovementioned moulding cycle, which machine has sensing means to observe the temperature of glass released from a said mould, characterised in that the machine has parts arranged to open a sight path from the glass to a sensor for an interval during opening movement of the mould during which interval the sensing means can observe the temperature of the glass.

Preferably the machine is also equipped with means to regulate a supply of coolant to the mould in response to the observed glass temperature.

In a preferred arrangement, an infra-red sensor is located within a housing positioned such that the sensor and the closed positions of the mould cavities lie on diametrically opposite sides of the pivot shafts for the mould halves, the infra-red sensor then viewing the formed glass through bores which traverse the pivot shafts of the mould halves. This arrangement places the infra-red sensor in a well protected position. Bores through which the formed glass is viewed may be arranged to come into alignment and give a sight path at a predetermined point in the moulding cycle.

An embodiment of the present invention will now be described with reference to the accompanying diagrammatic drawings in which:
Fig 1 is a partly sectioned plan view of the blank mould area of one section of an IS machine, with the moulds open; and
Fig 2 is a detail of the pivots with the moulds closed.

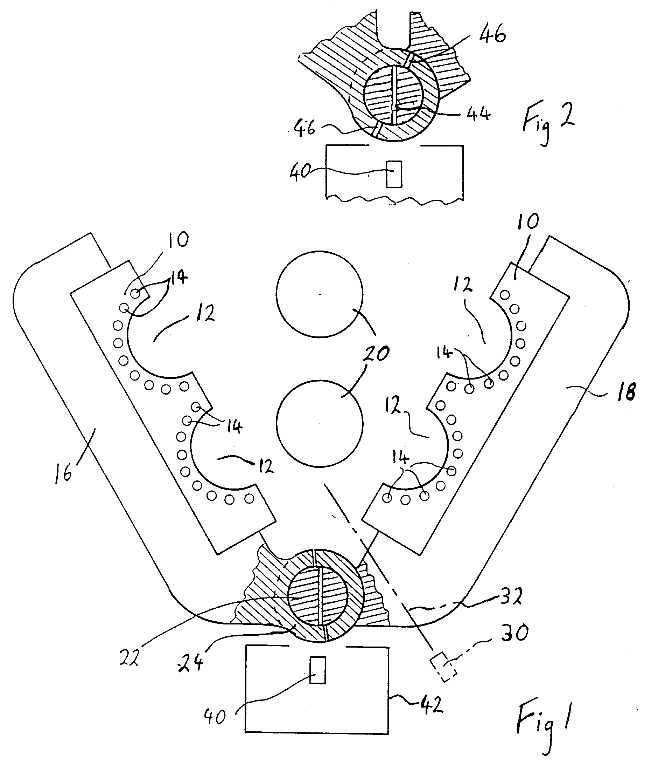

The machine has a pair of mould halves 10 defining mould cavities 12 which are each surrounded by plurality of passages 14 for the flow of cooling air. The mould halves 10 are mounted in carriers 16, 18 which swing around an arc between a position with the mould halves 10 closed together and the open position shown in Fig 1.

The positions of the closed mould cavities are indicated by the circles 20. The mould carrier 16 is mounted on a sleeve 24 concentric with shaft 22. The other mould carrier 18 is mounted on a second sleeve (not shown) concentric with the shaft 22 but axially spaced from sleeve 24. In use, as is conventional, the mould halves close together, gobs of molten glass drop into the mould cavities and are pressed or blown into parisons. The mould carriers 16, 18 then remove the mould halves 10 to the open position and the parisons, supported by neck rings carried on an arm (not shown) below the mould halves are carried away to the blow moulds where the parisons are blown out into the desired final shape.

One possible position for an infra-red sensor is at 30. At this position 30 the infra-red sensor can see the nearer parison along the chain dotted line 32 when the mould halves open, until the parison is carried away. Such a sensor would be connected to electrical or electronic controls governing the rate of delivery of cooling air to cool the moulds. These controls would be arranged to increase the supply of cooling air when the temperature of the formed parison was observed to increase, whereby the temperature of the mould halves would be reduced so that the temperature of subsequent formed parisons would also be reduced. Conversely, the supply of cooling air would decrease when the temperature of the formed parison decreases. In this way a negative feedback system would be established leading to a steady temperature of the mould halves and also a steady temperature of the parisons formed in the moulds.

To use the sensor 30 an electronic control could be arranged to take a reading from the sensor at the appropriate point in the machine operating cycle and the electronic control could be triggered to do this by the electronic control of the IS machine or, in the case of a mechanically timed machine, by a timing signal derived directly or indirectly from the machine's timing drum.

An alternative and preferred position for an infra-red sensor is at 40 inside a substantial housing 42 positioned adjacent the shaft 20 and sleeve 24. This housing is of substantial construction and protects the infra-red sensor from damage. It will be seen that the sensor and the positions of the closed mould cavities are on diametrically opposite sides of the shaft 22. To enable the sensor to see a parison, holes 44 and 46 are drilled through the shaft 22 and sleeve 24 respectively. The position of these holes is such that they are out of alignment when the moulds are closed, as shown in Fig 2, and are also out of alignment when the moulds are open, as shown in Fig 1, but pass through a state of alignment while the moulds are in between their closed and fully opened positions. This transient aligned state, (reached shortly before the fully open position), effectively provides a shutter exposing a newly-formed parison to the view of the sensor at a predetermined point in the machine's cycle just before the moulds reach their fully open position.

An infra-red sensor in this position 40 would be arranged to control the air flow to cool the moulds in the same way as with the sensor at position 30, in a negative feedback arrangement.

Arranging the infra-red sensor so that it is transiently views a parison through temporary coincidence of the holes 44, 46 is advantageous for the following reasons. The control system of the IS machine, whether it is a mechanical system or an electronic one, will initiate the opening of the moulds at a definite point in the machine operating cycle. However there will be a delay before the moulds actually open because of the time taken for the relevant control valves and pneumatic cylinder(s) to operate. This delay is not fixed but may vary slightly. As soon as the moulds begin to open the parison will begin to cool. By exposing the hot parison to the sensor through the transient coincidence of the holes 44, 46 the time of temperature measurement is fixed relative to the actual movement of the moulds, thereby eliminating any error which might otherwise arise through the variable delay in opening of the moulds. The timing drum or electronic control of the IS machine could still be employed to cause the sensor to take a reading but it would be arranged so that the electronic control or machine timing drum caused the sensor to read the temperature during a short span of time in the machine operating cycle, during the course of which span the holes 44, 46 would transiently coincide and establish the precise point at which the reading is taken. Electronic control circuitry can readily be arranged to monitor the temperature sensed by the sensor and distinguish the low temperature when the sensor is exposed to the sleeve 24 from the much higher temperature when the sensor is exposed to the hot parison through the holes 44, 46.

The electronic circuitry could if desired provide a visible readout of temperature, for inspection by the machine operator. Conceivably if such a readout was provided the control of coolant supply could be performed by the machine operator rather than being automatic, but this is not preferred.

## Claims

1. A method of monitoring or regulating temperature on an Individual Section machine for forming hollow glassware in a moulding cycle which comprises forming molten glass into a hollow parison in a mould (10) of a first set of moulds, releasing the parison from the mould, transferring it to a mould of a second set, blowing it out into shape and releasing the blown glassware from the second mould, which method includes a step of observing the temperature of glass released from a said mould,
characterised in that a sensor (30,40) for the temperature views the glass along a sight path (44,46 and 32) which is opened for an interval during opening movement of the mould by means of the machine's movement of the mould.

2. A method according to claim 1 wherein observation of temperature is effected by observing the colour temperature of the glass.

3. A method according to either one of the preceding claims wherein the said sensor observes radiation from the parisons as these are released from the first mould.

4. Individual Section machine for forming hollow glassware in a moulding cycle which comprises forming molten glass into a hollow parison in a mould (10) of a first set of moulds, releasing the parison from the mould, transferring it to a mould of a second set, blowing it out into shape and releasing the blow glassware from the second mould, which machine has sensing means to observe the temperature of glass released from a said mould,
characterised in that the machine has parts (22, 24) arranged to open a sight path (44, 46 and 32) from the glass to a sensor (30,40) for an interval during opening movement of the mould during which interval the sensor can observe the temperature of the glass.

5. A machine according to claim 4 further comprising automatic control means to regulate a supply of coolant to the said mould in response to the observed glass temperature.

6. A machine according to claim 4 or claim 5 wherein the sensing means observes the colour temperature of the glass.

7. A machine according to claim 4, claim 5 or claim 6, wherein the said sensing means observes radiation from the parisons as these are released from a first mould.

8. A machine according to any of claims 4 to 7 wherein the said parts are coaxial pivot shafts (22,24) for the mould halves, which shafts have bores (44,46) which come into temporary alignment for an intervial during opening movement of the mould halves, thereby opening a said sight path (44,46) from the glass through the aligned bores to the sensor (40).

## Patentansprüche

1. Verfahren zur Überwachung und Regulierung der Temperatur in einer IS (Individual Sections)-Maschine zum Formen hohler Glasgegenstände in einem Formvorgang, der das Formen von geschmolzenem Glas in einen hohlen Vorformling in einer Form (10) einer ersten Gruppe von Formen, das Loslösen eines Vorformlings aus der Form, seinen Transport zu einer Form einer zweiten Gruppe, sein Ausblasen in ein Formstück und das Loslösen des geblasenen Glasgegenstandes aus der zweiten Form umfaßt, welches Verfahren einen Schritt zur Beobachtung der Temperatur von aus einer genannten Form losgelöstem Glas beinhaltet,
dadurch gekennzeichnet, daß ein Temperatursensor (30, 40) das Glas entlang einer Sichtbahn (44, 46 und 32) betrachtet, die sich mittels der Formbewegung durch die Maschine für einen Zeitraum während der Öffnungsbewegung der Form öffnet.

2. Verfahren nach Anspruch 1, worin die Temperaturbeobachtung durch Beobachtung der Farbtemperatur des Glases erfolgt.

3. Verfahren nach einem der vorhergehenden Ansprüche, worin der genannte Sensor die Strahlung beobachtet, die von den Vorformlingen bei deren Loslösung aus der ersten Form ausgeht.

4. IS (Individual Sections)-Maschine zum Formen hohler Glasgegenstände in einem Formvorgang, der das Formen von geschmolzenem Glas in einen hohlen Vorformling in einer Form (10) einer ersten Gruppe von Formen, die Loslösung des Vorformlings aus der Form, seinen Transport zu einer Form einer zweiten Gruppe, sein Ausblasen in ein Formstück und die Loslösung des geblasenen Glasgegenstandes aus der zweiten Form umfaßt, welche Maschine eine Fühleinrichtung zur Beobachtung der Temperatur des aus einer genannten zweiten Form losgelösten Glases beinhaltet,
dadurch gekennzeichnet, daß die Maschine Teile (22, 24) besitzt, die so angeordnet sind, daß sie für einen Zeitraum während der Öffnungsbewegung der Form eine Sichtbahn (44, 46 und 32) vom Glas zu einem Sensor (30, 40) öffnen, wobei der Sensor während dieses Zeitraums die Glastemperatur beobachten kann.

5. Maschine nach Anspruch 4, die weiters ein automatisches Steuerungsmittel zur Regulierung der Kühlmittelzufuhr zu der genannten Form als Reaktion auf die beobachtete Glastemperatur umfaßt.

6. Maschine nach Anspruch 4 oder Anspruch 5, worin die Fühleinrichtung die Farbtemperatur des Glases beobachtet.

7. Maschine nach Anspruch 4, Anspruch 5 oder Anspruch 6, worin die genannte Fühleinrichtung die Strahlung beobachtet, die von den Vorformlingen bei deren Loslösung aus einer ersten Form ausgeht.

8. Maschine nach einem der Ansprüche 4 bis 7, worin die genannten Teile koaxiale Gelenkbolzen (22, 24) für die Formhälften sind, welche Gelenkbolzen Bohrungen (44, 46) aufweisen, die für einen Zeitraum während der Öffnungsbewegung der Formhälften vorübergehend ausgerichtet sind, wodurch eine genannte Sichtbahn (44, 46) vom Glas durch die ausgerichteten Bohrungen zum Sensor (40) geöffnet wird.

## Revendications

1. Procédé pour surveiller ou régler la température d'une machine sectionnelle pour mouler des objets en verre creux dans un cycle de moulage qui comprend les étapes consistant à former du verre moulu en une ébauche creuse dans un mou le (10) d'un premier ensemble de moules, à enlever l'ébauche du moule, à la transférer à un moule d'un deuxième ensemble, à la souffler en forme et à enlever l'objet en verre soufflé du deuxième moule, ce procédé comprenant une étape consistant à observer la température du verre enlevé d'un desdits moules,
caractérisé en ce qu'un capteur (30,40) de la température détecte le verre le long d'un trajet de visée (44,46 et 32) qui est ouvert pour un intervalle pendant le mouvement d'ouverture du moule au moyen du mouvement de la machine du moule.

2. Procédé selon la revendication 1, dans lequel l'observation de la température est effectuée en observant la température de couleur du verre.

3. Procédé selon l'une des revendications précédentes, dans lequel ledit capteur observe le rayonnement des ébauches lorsque celles-ci sont enlevées du premier moule.

4. Machine sectionnelle pour former des objets en verre creux dans un cycle de moulage qui comprend les étapes consistant à former du verre mou lu en une ébauche creuse dans un moule (10) d'un premier ensemble de moules, à enlever l'ébauche du moule, à la transférer à un moule d'un deuxième ensemble, à la souffler en une forme et à enlever l'objet en verre soufflé du deuxième moule, cette machine possédant des moyens capteurs pour observer la température du verre enlevé d'un desdits moules,
caractérisée en ce que la machine a des pièces (22,24) disposées pour ouvrir un trajet de visée (44, 46 et 32) du verre à un capteur (30, 40) pour un intervalle pendant le mouvement d'ouverture du moule, pendant cet intervalle, le capteur peut observer la température du verre.

5. Machine selon la revendication 4, comprenant en outre un moyen de commande automatique pour régler une amenée d'agent réfrigérant audit moule en réponse à la température de verre observée.

6. Machine selon la revendication 4 ou la revendication 5, dans laquelle le moyen capteur observe la température de couleur du verre.

7. Machine selon la revendication 4, la revendication 5 ou la revendication 6, dans laquelle ledit moyen capteur observe le rayonnement des ébauches lorsque celles-ci sont enlevées d'un premier moule.

8. Machine selon l'une des revendications 4 à 7, dans laquelle lesdites pièces sont des boulons d'articulation coaxiaux (22, 24) pour les moitiés de moule ces boulons possédant des perçages (44, 46) qui sont temporairement en alignement pendant un intervalle pendant le mouvement d'ouverture des moitiés de moule, en ouvrant ainsi un trajet de visée (44, 46) du verre à travers les perçages alignés au capteur (40).
